# EUROPEAN PATENT APPLICATION

(11) **EP 4 664 396 A1**
(43) Date of publication of application: **17.12.2025**
(21) Application number: 24181231.2
(22) Date of filing: 10.06.2024
(51) Int. Cl.: G06T 7/00, G06V 20/69

(54) **SYSTEMS AND METHODS FOR ANALYSING MEDICAL IMAGE DATA**

(71) Applicant: SpatialX Diagnostics Ltd, London W11 4JA (GB)
(72) Inventor: Shaker, Noor, London, W11 4JA (GB); Shaker, Nuha, London, W11 4JA (GB)
(74) Representative: Potter Clarkson

(57) **Abstract**

A method for analysing medical image data, the method comprising steps of: receiving medical image data comprising an image; using predetermined criteria to identify one or more subsets of cells in the image by identifying one or more characteristics of the cells; providing a matrix corresponding to the image comprising a plurality of elements, wherein each element corresponds to a spatial area in the image; populating the matrix by assigning an intensity value to each element in the matrix, the intensity value representing an intensity of a feature of the subset of identified cells in the corresponding area in the image, and processing the populated matrix to identify a classification for the medical image data.

## Description

### FIELD OF THE INVENTION

The invention relates to systems and methods for analysing medical image data.

### BACKGROUND TO THE INVENTION

Medical imaging plays a pivotal role in modern medicine. Radiographic techniques, such as X-rays, magnetic resonance imaging (MRI), and computed tomography (CT), can provide detailed anatomical information. Medical image data can also be gathered from biopsy samples extracted from a patient and then imaged using e.g. digital scanning.

Conventionally, medical image data has been analysed manually, i.e. by a human expert viewing and interpreting the images. Manual interpretation is time-consuming, subject to human error and unscalable. Thus in recent years, attempts have been made to use computers to automate image analysis.

However, automated processing of image data has faced a number of challenges. Medical data is often large in size, and comprising for example detailed high-resolution images, 3D models, or multiple data channels. This creates storage, retrieval, and transmission problems when working with such data.

Existing methods for analysing images work by correlating features extracted directly from the image to selected endpoints. In some systems, an intermediate step is performed to extract statistics from image-extracted features and use those for further analysis. There are several bottlenecks in these processes:(1) human-selection of hand-crafted metrics is prone to bias, and may include the selection of generic features that are not necessarily problem-relevant; (2) deep learning process individual small-size patches, and given the usually large size of medical images, global arrangement are usually lost and (3) details about interactions between modalities are usually lost.

Accordingly, there is a need for improved methods for processing and analysing medical image data.

### SUMMARY OF THE INVENTION

According to a first aspect, there comprises a method for analysing medical image data, the method comprising steps of: receiving medical image data comprising an image; using predetermined criteria to identify one or more subsets of cells in the image by identifying one or more characteristics of the cells; providing a matrix corresponding to the image comprising a plurality of elements, wherein each element corresponds to a spatial area in the image; populating the matrix by assigning an intensity value to each element in the matrix, the intensity value representing an intensity of a feature of the subset of identified cells in the corresponding area in the image, and processing the populated matrix to identify a classification (such as a diagnostic or prognostic classification) for the medical image data.

By identifying one or more cell characteristics, and then constructing a matrix that numerically differentiates these characteristics via intensity values, the method can provide a digital representation which has the same, larger, or smaller dimensionality while preserving important spatial, morphological and/or interaction information of the selected modalities. The matrix may be processed (e.g. by deep learning or other image-processing methods) to produce a feature embedding that captures spatial, morphological and interaction information. Compared to the original image data, the populated matrix enhances the key morphological, spatial, and/or interaction information in the image data, capturing morphological and interaction features that are difficult to capture otherwise. Processing the populated matrix rather than the original image may therefore be more efficient and provide improved accuracy for feature extraction and for building classification models.

The identified subset of cells may comprise all cells of single cell type ortissue modality. For example, the identified subset of cells may include all tumour cells in the image. Alternatively, the identified subset of cells may comprise a plurality of cell types, such as e.g. all the cells in an image which are not tumour cells. For each element in the matrix, an intensity of a feature of the identified subset of cells in the corresponding image area is determined. One example of a feature would be the spatial density of identified cells in the corresponding image area. As such in one example, the intensity value may represent the spatial density of a single cell type. In another example, the intensity value may represent the proportion of the corresponding area covered by cells from the identified subset of cells.

In another example, the method may be used to identify different types of cells and classify cells by cell morphology, by segmenting the cells using the characteristic or feature of cell boundaries.

Optionally, the step of using predetermined criteria to identify one or more subsets of cells in the image by identifying one or more characteristics of the cells comprises identifying features of cells in the image, and optionally identifying visual, morphological and spatial features of the cells comprises using a supervised or unsupervised model. For example, a semantic similarity-based model may be used, in which modalities are not predefined but rather the system is used to differentiate objects based on their similarity, leading to identification of known and new modalities in an unsupervised method.

In other examples, the intensity characteristic may represent the relative concentration of the identified cells relative to another cell type. For example, a 0% intensity value indicates that the area is 0% tumour region and a 100% intensity indicates 100% tumour region. In other examples, the intensity characteristic may represent a colour, morphology, or other characteristic of the identified cells in the corresponding image area.

In some examples, the intensity value can take any value between a maximum and minimum value (e.g. between 0 and 100). In other examples, the intensity value may be a binary value (i.e. only either a first intensity value, or a second intensity value). The first intensity value (e.g. 100) may be assigned if identified cells are located in the corresponding area of the image, with the second intensity value (e.g. 0) assigned otherwise.

When processing image data, a predefined set of tissue and cell types may be identified as the subset of cells. These are then processed to populate the matrix, allowing analysis of different forms of interactions between different modalities.

The matrix may comprise a single intensity value for each element. Alternatively, the matrix may comprise multiple values for each element, with e.g. each intensity value representing the intensity of a different characteristic.

When machine learning is used to process the representation, it may operate in a supervised or unsupervised manner. In an exemplary supervised learning system configuration, a labelled training dataset is provided whereby for each sample of image data, a classification such as a tumour characteristic score or patient outcome is provided to the system. The system is trained to learn the classification from the labelled datasets. Once trained, the system can be used to generate and classify matrices from new image data.

The representation may also be processed to generate a feature embedding in an unsupervised manner. For example, a variational-auto encoder may be used to generate a compressed feature embedding that can be inputted into a third system for correlation analysis.

Optionally, the method further comprises the step of generating a representation from the matrix, wherein the representation is processed to identify a classification, and optionally the representation is an image or graph.

Appropriate conversion of the matrix may be applied as necessary to form a representation for different machine learning methods. For instance, when multi-resolution based image analysis methods are used, compatible multi-resolution color-coded images may be generated. Similarly, when graph-based methods are used, a graph representation of the color-coded image may be generated.

Optionally, identifying the classification comprises providing the matrix or representation to a pretrained classification system.

Optionally, the classification system comprises a deep learning system, and optionally the classification system comprises one or more of a: convolutional neural network; decision tree; support vector machine; single or multi-layer perceptron; generative or adversarial network; autoencoder; inception system; Monte Carlo tree search model; residual neural network; self-organizing map; transformer-based model; graph convolutional neural network; graph model, or graph to graph autoencoder. As an alternative to deep learning, the classification system may utilise statistical methods.

Exemplary deep learning methods may include UNet, Inception, VGG, or other methods. The best-performing deep learning model may be selected depending on the features of interest for a particular task. For example, UNet models may perform best when cell morphology is a feature of the identified cells , whereas another model may be better when the feature of interest is tumor shape.

In some examples, the classification system comprises an ensemble system comprising a plurality of model architectures. This enables the classification system to run ensumble-based analysis whereby the matrix is processed independently by each model, and then a combined classification is generated via e.g. majority or weighted voting. This enables the classification system to benefit from the strength of different models.

When preparing training data for the classification system, all generated matrices may be included in the training data. Alternatively, a subset of these matrices may be selected. The selection of training samples may be based on manual selection, random selection, or another machine learning system such as clustering or based on information gain scores.

Optionally, the method further comprises a step of generating a diagnostic prediction based on the classification, and further optionally comprising a step of generating a treatment regimen based on the identified classification.

Such a diagnostic prediction could include for example, a risk score for a patient, generated from the classification and the demographic profile of the patient. The diagnostic prediction may additionally or alternatively comprise a survival prediction, a mutation prediction, and/or a response prediction for a given treatment regimen.

Optionally, the method further comprises the step of generating a treatment regimen based on the classification. This may include a recommendation for a particular course of medication, a surgical procedure, and/or a modification to an existing treatment.

Optionally, the method further comprises the step of generating a diagnostic or prognostic biomarker based on the classification.

Optionally, the medical image data further comprises patient-related information, and the patient-related information and populated matrix are processed together to identify the classification. A dataset containing image data may comprise omics data, medical history, demographic data, selected treatment approach, etc..

The patient is the person or animal from whom the medical image data was imaged. Patient-related information may include one or more of the patient's demographics, current treatment pathway, or desired outcome. Patient-related information may alternatively or additionally include genetic or genomic information about the patient.

The representation may be combined with one or more features representing a numerical vector containing scores for tumour, tumour pattern identifier, tumor invasiveness score, patient demographics, tumour grade, tumour stage, treatment, survival, and/or other medical information.

Optionally, the feature comprises at least one of a: spatial; visual; morphological; genomic; or molecular feature of the subset of identified cells in the corresponding area of the image. Exemplary features may include the spatial density, interaction or arrangement with other cells, size or shape of cells, colour or transparency of cells, or the gene expression level of a particular gene.

Optionally, the matrix has a differing resolution compared to a resolution of the image, and optionally the matrix has a differing dimensionality compared to the dimensionality of the image.

For example, the image may comprise a 100,000x100,000 pixel image, whereas the matrix may comprise a resolution of e.g. 500x500 elements (lower spatial resolution). Or e.g. the image may comprise 3 colour channels with a 256-bit intensity resolution for each channel, whereas the matrix comprises 1 intensity value with an 8-bit intensity resolution.

Medical image data is often very high-resolution and/or high dimensionality. For example, Whole Slide Image (WSI) data can comprise billions of full-colour pixels, with a file size in the order of gigabytes. It is extremely computationally expensive, if not impossible, to process such image data. A matrix can be provided with a lower dimensionality and/or resolution compared to the image, while still representing the entirety of the image field. This enables savings in processing time and memory storage, as well as efficient capturing of global information. Furthermore, interaction and morphological patterns can be extracted from the matrix that cannot necessarily be detected on a higher resolution image, or when looking at the image patch-by-patch.

The reduced dimensionality/resolution matrix preserves spatial arrangement and morphology, yet provides a more compact, higher-level representation.

Higher resolution or dimensionality may be used to intensify the characteristics of certain elements, such as individual cell morphologies. E.g. the image may comprise 3 colour channels with a 256-bit intensity resolution for each channel, while the matrix may represent the cell morphology at each corresponding location by means of e.g. a 10-dimensional matrix for each element.

The assigned intensity values may be assigned to fall between a preset maximum and preset minimum value.

Optionally, the method further comprises the steps of: providing a first and second matrix, the first matrix having a higher spatial resolution than the second matrix, populating the first and second matrices, andprocessing the first and second matrix to identify a classification for the medical image data. The identified subset of cells and the features represented by the intensity value may be the same for the first and second matrices, or one or both may be different.

In some examples, the image data comprises the same image at different resolutions. The first and second matrix may be generated from these different resolutions of the same image, allowing capturing more or less granular interactions and morphological details.

Providing a first and second matrices with different resolutions may be advantageous because images may comprise different types of information at different resolutions. For example, a lower resolution matrix may capture features such tissue infiltration and cell distributions, while a higher resolution matrix may capture spatially small details such as the morphology of individual cells. Using multiple matrices with different resolutions allows key features at different scales to be captured.

Optionally, processing the populated matrix to identify the classification for the medical image data comprises the step of generating an embedding vector from the populated matrix, and processing the embedding vector to identify the classification.

For example, a variational-auto encoder may be used to generate a compressed feature embedding from the matrix. This may be inputted into an embedding analysis system which identifies the classification, e.g. by correlation analysis. The embedding analysis system may also receive the populated matrix as well as other information, such as other matrices from other resolutions of the image, other representations from other subsets of cells and tissues, patient-related information (demographics, treatment, outcome) or other image descriptors such as nuclear grade, tumour/stroma ratio, number of cells, etc.

In some examples deep learning models may be used to process the matrix in order to generate the embedding vector. Deep learning models may also be used to process the embedding vector to generate the classification. Using two deep learning layers, a first to generate the matrix and a second for classification, may provide improved accuracy and efficiency compared to using a single deep learning layer or relying on human-extracted features.

Optionally, the method further comprises a step of identifying a region of interest within the medical image data or representation.

In some examples, the whole image is processed to generate the populated matrix. In other examples, the region(s) of interest are extracted from the image data and processed according to the first aspect. Alternatively, cell location may be a characteristic for identifying the subset of cells, such that e.g. only cells within a region of interest will be selected for the subset of cells. Regions of interest may include a region comprising tumour or other biological feature within the image data, or a subsection of said feature such as an edge region of the tumour.

Optionally, identifying regions of interest in the image data comprises processing the image data using a pretrained region identification system. The region identification system may be a CNN or other machine learning based system which is designed to identify tumour edge regions, or other regions of the image data based on certain heuristics. These regions of interest can also be identified by manual selection, random selection, or a system that marks these regions. The regions of interest may be of any shape.

The populated matrix may be associated with the location of the identified subset of cells, an individual cell, or a region of interest.

Optionally, an iterative system may be applied whereby regions of interest are first selected and populated matrices are generated. While processing the matrices, the system may require additional training samples. More regions in the image can then be identified for generating more populated matrices to add to the training data.

Alternatively, a single populated matrix image may be generated for each medical image. The image can be divided into sections. Multiple matrices may then be generated from each section.

Optionally, the method further comprises the step of: generating an additional feature embedding vector representing one or more additional characteristics of a subset of cells within the region of interest; and wherein the populated matrix and additional feature embedding vector are processed to identify a classification for the medical image.

Additional characteristics may be any of the characteristics previously described. In some examples, the additional characteristics may be any characteristics other than those already represented by the intensity values in the matrix. The additional characteristics may include scores for individual cells or for the subset of cells as a whole. An exemplary additional embedding vector includes scores for one or more of the tumour, tumour pattern identifier, tumour invasiveness score, patient demographics, tumour grade, tumour stage, treatment, survival, and/or other medical information. The additional embedding vector may additionally or alternatively include any combination of the type, morphology, density, colour, and arrangement of the cells in the region of interest. For example, tumour cell morphology can be captured by a deep learning model or by a mathematical function that captures different patterns. This information as well as the 3D coordination of the cells in the volume of tissue can be incorporated in the additional embedding vector. Genomic data for the region of interest can also be represented by the embedding vector. In some examples, genomic data may be captured using spatial transcriptomics, allowing gene expression or genomic data to be associated with individual cells or other small spatial regions. In some examples, genomic data for generating the additional embedding vector is received from an external source.

The contents of the additional embedding vector may be generated by inputting the image to a machine learning system that outputs the embedding vector for the region of interest or one or more cells in the region of interest.

The additional embedding vector may enable these additional cell characteristics to be associated with a location in the matrix. The data in the additional embedding vector may enable details of this location to be compressed and efficiently used with the matrix.

The totality of the embeddings generated may be inputted to a learning system. Alternatively, a subset of these embedding may be inputted such as the output of the system is optimised. The subset may be determined by an expert or by another system configured to learn the importance of each embedding to the final output.

Alternatively or additionally, the processing of representation outputs a score for each region of interest. The score given to each region may be convertable into another matrix representation that aide in understanding the distributions of these regions and their relation to tumor characteristics and patient outcome.

Optionally, the step of using predetermined criteria to identify the one or more subsets of cells in the image by identifying one or more characteristics of the cells comprises classifying cells in the image by cell or tissue type.

At the simplest level, the cell type may be identified as either "tumour cell" or "non-tumour cell" or with more details e.g. epithelial, fiboblasts, smooth muscles, blood vessels, goblet cells, etc.

Optionally, wherein identifying visual features of cells in the image data comprises using a pretrained visual information identification system.

The pretrained visual information identification system may comprise a statistical model for feature extraction or a machine learning system such as a convolutional neural network (CNN). This provides improved computational efficiency. Identifying visual features of cells from the image data may comprise using a semantic similarity-based model

Optionally, the method further comprises the steps of: using predetermined criteria to identify a second subset of cells in the image by identifying one or more characteristics of the cells, and: assigning a second intensity value to each element in the matrix, the second value representing an intensity of a feature of the second subset of identified cells in the corresponding area in the image, and optionally the first identified set of cells comprise a first cell or tissue type, and the second identified subset of cells comprise of a second cell or tissue type.

A representation of the intensity of the second subset of identified cells may be constructed from the second intensity values. Hence, a representation may be constructed for each cell type or tissue modality. For example, a first representation may be constructed for regions which are identified as tumour regions, and a second representation may be constructed for regions which are identified as stroma. The second intensity values may be stored as part of the same matrix as the first intensity values as described, or alternatively they may be stored in a separate matrix.

This may allow a multimodal matrix to be built up. In some examples, the matrix may represent a multi-colour colourmap of the image, where the each colour represents e.g. the spatial density of a different cell type across the image.

This process may be repeated for a third, fourth etc. set of cells, each comprising a different cell type.

The second matrix may comprise a different resolution to the first matrix. This enables different resolutions to be used depending on e.g. the type of information of interest. The second matrix may correspond to the same area of the image as the first matrix, or alternatively it may correspond to a different area, such as an overlapping but distinct area of the image.

Optionally, the method further comprises a step of displaying the matrix as a colourmap on via a display device, wherein each element of the matrix is displayed with a colour intensity corresponding to its intensity value.

The colourmap may be displayed using any suitable method, for example a display screen or provided as a printout (i.e. using a printer as the display device). The colourmap allows a user such as a physician to more easily see the spatial relationships between cells and surrounding tissues and malignant and non-malignant cell arrangement in the image compared to the raw image data, morphological information and size of each region and the distribution of cells, enabling the user to identify ratios, infiltration and visually identifiable patterns more quickly and accurately.

The classification result may also be displayed via the display device, enabling the user to compare the classification and colourmap and thereby ascertain whether the classification appears accurate.

An intensity value can also be coloured as a spectrum or heatmap that reflects the distribution of other features within that specific intensity value. For example, a tumor region can be visualised as a colourmap whereby a high concentration of lymphocytes is represented in dark red that fades to blue reflecting less concentrated regions of such cells.

Where an element comprises more than one associated intensity value, different colours may be used to build up a multi-colour colourmap. For example, a matrix may comprise first intensity values representing the spatial density of tumor regions, and second intensity values representing the spatial density of cells within tumor. A colourmap may be constructed and displayed from this matrix, in which the first intensity values are displayed as blue shades and the second intensity values are overlayed as red shades. Densely populated areas of cells will be displayed in red against a blue background of tissues.

Optionally, wherein identifying a classification comprises identifying, from the representation, a characteristic of a tumour within the representation, and optionally the characteristic comprises an infiltration pattern of the tumour.

Optionally, the method further comprises the step of generating a diagnostic or prognostic biomarker based on the classification of the tumour.

It has been found that tumour characteristics such as size, nucleus morphology, invasiveness and interactions with surrounding tissues are conceptually indicative of tumour behaviour and the end progression of cancer patients. For example, the infiltrating pattern at the leading edge of the tumour can be a potential indicator of behaviour, and has been recently associated with disease outcome. By enhancing the distinctiveness of key features such as infiltration patterns, the matrix enables the characteristics of a tumour such as its infiltration pattern into surrounding tissue to be discerned more clearly and thereby classified more accurately.

The infiltration pattern may characterise a representation of malignant and non-malignant cells, types and their spatial arrangements. Infiltration patterns may be identified corresponding to the classification of tumours infiltrating into surrounding tissue (which is an adverse prognostic factor). Capturing malignant and non-malignant cell types and their spatial arrangements may be useful for better prognostic and cancer management. For the tumours that are prone to exhibit more variable growth patterns such as pancreatic neuroendocrine tumours, and colorectal adenocarcinomas, the degree of demarcation versus the infiltrative spread of the neoplastic cells at the periphery of the tumour has been found to yield invaluable prognostic information. In fact, this may be one of the main determinants of benign versus malignant diagnosis in thyroid neoplasms.

The inventors have recognised that spatial distribution of cells and cell morphology in the tumour microenvironment (TME) is not random but is rather associated with the underlying functional state. Therefore, the exploration of the TME of cancer samples offers critical insights into the key spatial patterns associated with the growth, cancer progression, and thus patient prognosis.

Depending on the tumour stage and clinical scenario, different tumour characteristics can drive clinical decision-making. Such information would allow the physician to select the right treatment or dosage or predict the outcome of a specific treatment. The information can also be used to support patient stratification in clinical trial by selecting the patient population that is most likely to respond to a treatment. It may also support clinicians when predicting adverse outcomes and selecting the right course of treatment, e.g. chemotherapy, radiofrequency/microwave ablation. As well as a theranostic markers in supporting diagnosis, pre-operative evaluation and management of patients. Also, the method can empower clinicians to make informed decisions regarding neoadjuvant and adjuvant therapies, as well as aid in patient selection for surgical resections versus those who may benefit from local minimally invasive procedures.

The classification method can provide improved outcomes for individual patients, as well as improve efficiency at the level of the healthcare system. For individual patients, the classification method can assist medical professionals in providing more accurate and refined diagnoses of cancer type, enabling them to select the most effective and appropriate monitoring or treatment regimen. Healthcare systems can therefore allocate resources more effectively, improving patient outcomes overall.

Additionally, the classification method can facilitate research and development of new treatments for cancer. One challenge when developing new cancer treatments is conducting accurate experimental validation. If the test samples have been incorrectly identified, then the efficacy of the treatment is more difficult to evaluate or the treatment might be evaluated as ineffective, when indeed the selected patient cohort compromises poor or non-responders, or as generally effective when the test cohort is all responders. For example, if a treatment is tested on an aggressive tumour which has been incorrectly classified as less aggressive, then the effect of the treatment may be different than expected, leading researchers to disregard a potentially effective treatment. The method can be used to classify tumours more accurately, improving the quality of selecting the test sample groups. Another use for the technology is selecting the right patient population- patient stratification- for a clinical trail to test the effectiveness of a treatment-based or predicted response. A population of patients that are likely to respond to the treatment can be identified as opposite to patients with the disease but with poor response. This also helps market treatments under development targeting only patients where the treatment can be effective.

The classifications may be predetermined, such that the method classifies the tumour into one of a plurality of risk levels, for example. The classifier may output a score for differentiating tumour patterns. This information, together with the populated matrix may be inputted into another system that categorises the tumour patterns and correlates the patterns with the severity of a disease condition or treatment outcome.

Optionally the method comprises the step of identifying, based on the classification, an importance level for one or more of the spatial or feature intensities charactersitcs, and further optionally, the method further compromises the step of generating an explainability representation for the image data, the representation indicating the importance level for each of the one or more spatial or feature intensities characterstics.

In other words, the method may additionally perform explainability analysis. An explainability analysis system may be configured to interpret the classification and provide an explanation of the importance of different features, spatial areas of the matric, or regions of interest in influencing at the classification. The explainability analysis may be stored or displayed to a user as a representation. For example, a colourmap may be generated with colours representing the importance of particular areas in the image in influencing the classification.

Optionally, the image data comprises images of stained tissue or Whole Slide Image data. Images may be stained manually using human annotations (e.g. colouring in tumour regions), by chemically staining the tissue before imaging, or by machine learning techniques for classification and segmentation.

Optionally, the image data comprises Whole Slide Image data acquired through biopsies or surgical resection. Alternatively or additionally, the image data comprises other biomedical image data such as TMAs (Tissue Microarray data), or other imaging modalities such as radiology images.

Optionally, the medical image data comprises a plurality of images, and the classification of the medical image data comprises a similarity score for each image in the medical image data.

The populated matrices and/or representations may be used for image similarity analysis and retrieval. For example, clustering methods may be applied to represent embeddings or may be visualised on two or three-dimensional space using dimensionality reduction methods. Similar images may then be clustered together based on their similarity scores, thereby highlighting tumours with similar characteristics. In another example, the similarity scores may facilitate extraction and retrieval of images containing tumours, or containing regions with similar characteristics to a selected image.

The image data may comprise images of stained tissues for one or multiple biomarkers This increases the visual differentiation between cells, enabling characteristics and features of cells to be determined more easily. Tissues can be stained with routine H&E or any other immunohistochemistry stains that provide additional means to identify cells.

According to a second aspect, there comprises a data processing device configured to carry out the method of the first aspect.

According to a third aspect, there comprises a computer-readable storage medium comprising instructions which, when executed by a data processing device, cause the data processing device to carry out the method of the first aspect.

According to a third aspect, there comprises a computer program comprising instructions which, when executed by a data processing device, cause the data processing device to carry out the method of the first aspect.

The term "patient" may refer to a human patient. As such, the source of the image data may be from a human patient. However, it will be understood that the method may also be performed in respect of an animal subject or other test subject.

### BRIEF DESCRIPTION OF THE DRAWINGS

Figure 1 illustrates a process flow diagrams for carrying out an exemplary method.
Figures 2(a)-(e) graphically illustrate the steps of an exemplary method on a simplified schematic example of medical image data.
Figures 3(a)-(f) illustrates an exemplary Whole Slide Image alongside colourmaps of different tissue subsets generated from the image.
Figure 4 illustrates an exemplary method for processing the populated matrices.
Figure 5 illustrates an exemplary method for identifying subsets of cells and tissues in image data.
Figure 6 illustrates an exemplary system configured to carry out the method of calculating the representation of cells or regions of interest.
Figure 7 illustrates a schematic block diagram of an exemplary data processing device for carrying out the method.
Figures 8(a) and 8(b) illustrate an exemplary medical image and a colourmap representation of said image.
Figures 9(a) and 9(b) illustrate colourmap representations of a medical image overlaid over the image.

### DETAILED DESCRIPTION

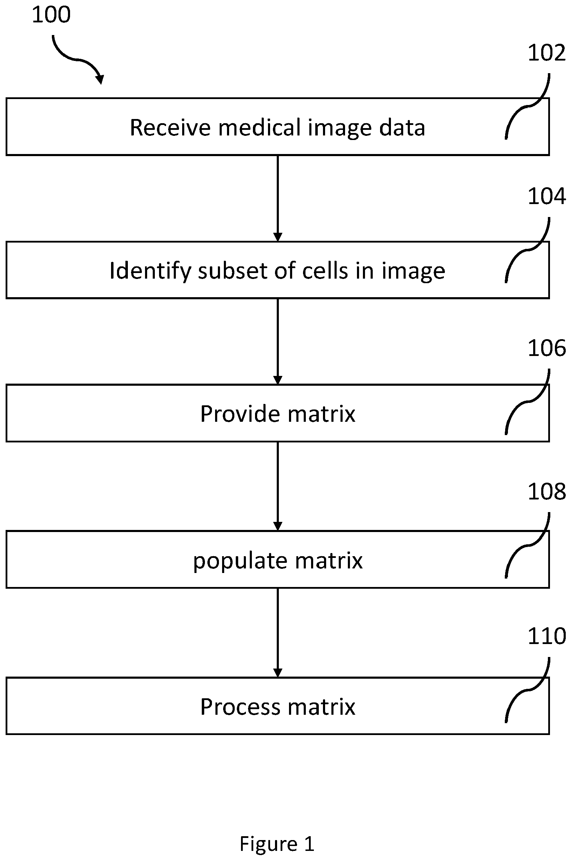

An exemplary method 100 for analysing medical image data is described with reference to Figure 1.

Firstly, medical image data is received 102. If the image data comprises a plurality of images, then the method 100 may be repeated for each image.

Predetermined criteria are used 104 to identify one or more subsets of cells in the image by identifying one or more characteristics of the cells.

A matrix is provided 106 corresponding to the image comprising a plurality of elements, wherein each element corresponds to a spatial area in the image;
The matrix is populated 108 by assigning an intensity value to each element in the matrix, the intensity value representing an intensity of a feature of the subset of identified cells in the corresponding area in the image.

Finally, the populated matrix is processed 110 to identify a classification for the medical image data.

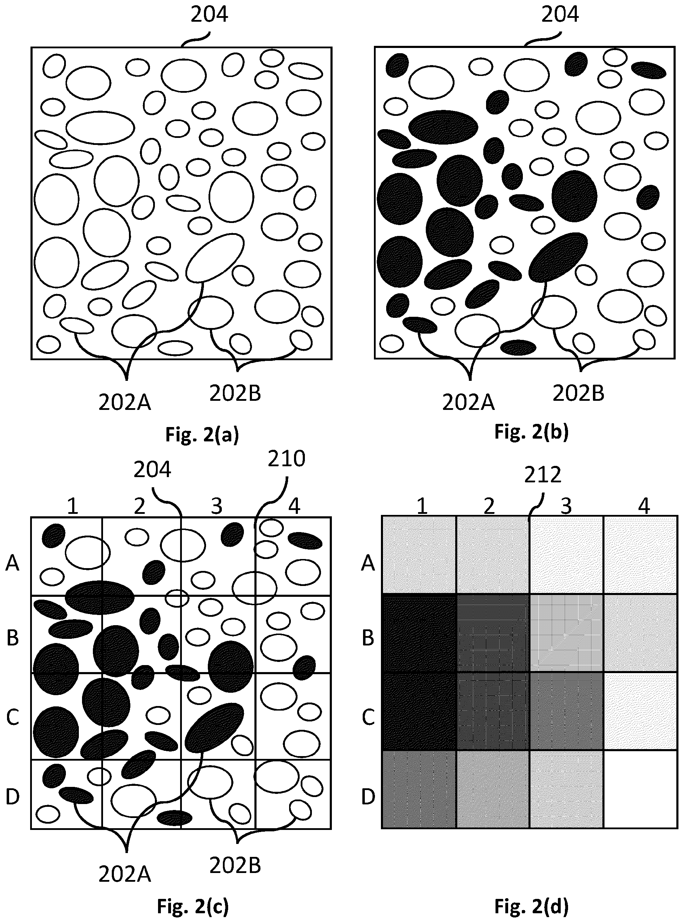

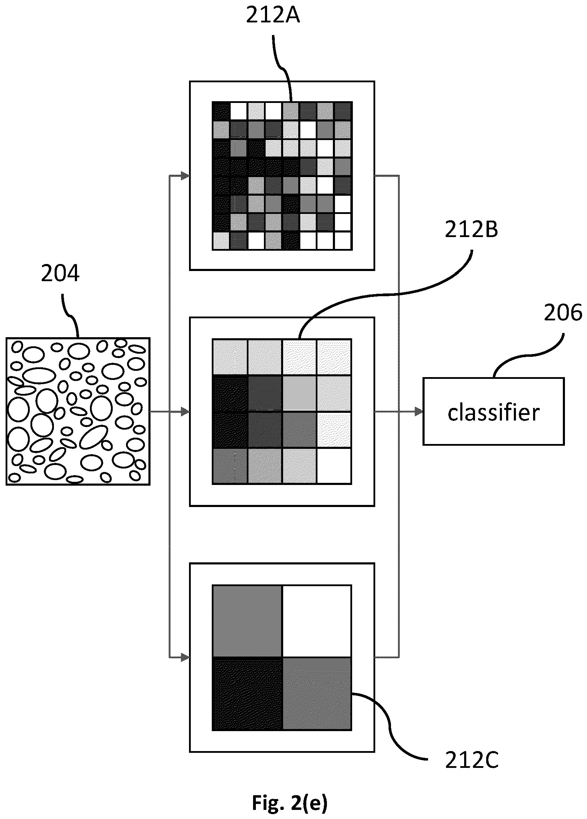

This method 100 is illustrated graphically in Figure 2. Figure 2(a) shows a medical image 204 (in this case, a simplified representation of a medical image) comprising two cell modalities 202; A-type cells 202A and B-type cells 202B. In the conventional approach, the image 204 would be analysed directly, either by processing the whole image at once or by dividing the image into patches and analysing each patch independently.

Instead, as shown in Figure 2(b) the image is first processed to identify a subset of cells. In this case, cells 202A of cell type A are identified. This is done by identifying characteristics of cells and thereby identifying differential characteristics between A-type cells 202A and 202B. In this example, the A-type cells 202A have different morphological characteristics (being either larger or more elliptical) compared to B-type cells. For the purposes of illustration, the identified A-type cells are shown coloured in black.

As shown in Figure 2(c), a matrix 210 is then provided. The matrix 210 is illustrated overlaying the image 204. Each element A1-D4 of the matrix 210 corresponds to an area of the image 204. The matrix 210 is then populated by assigning an intensity value to each element A1-D4, the intensity value representing an intensity of a feature of the subset of identified cells in the corresponding area in the image 204. In this case, the feature represented by each intensity value is the ratio by total covered volume of A-type cells 202A to B-type cells 202B in the corresponding area of the image. A higher ratio of A-type cells 202A to B-type cells 202B is assigned a higher intensity value.

Figure 2(d) shows a colourmap of these intensity values. Higher intensity values are illustrated by darker colours. This colourmap enhances the distinctiveness of a key informational feature from the original image 204 (in this case, the ratio of A-type 202A to B-type 202B cells), while also having a lower resolution. The matrix 212 can then be processed to generate a classification.

As shown in Figure 2(e), in some examples a plurality of populated matrices 212A-C may be generated, each having a different resolution. Matrix 212A has a higher spatial and intensity resolution than matrix 212B, while matrix 212C has a lower spatial and intensity resolution than matrix 212B. The populated matrices 212A-C are all passed to the classifier, whereupon they are processed to identify a classification for the medical image data 204. In some examples, the resolution of matrix 212B may be the same as the original image, such that matrices 212A and 212C have higher and lower resolutions than the original image, respectively.

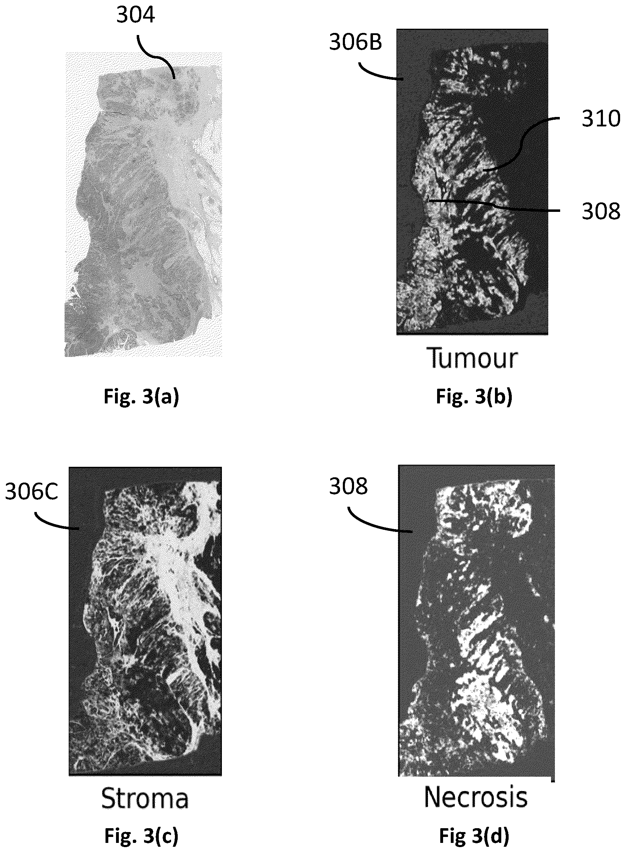

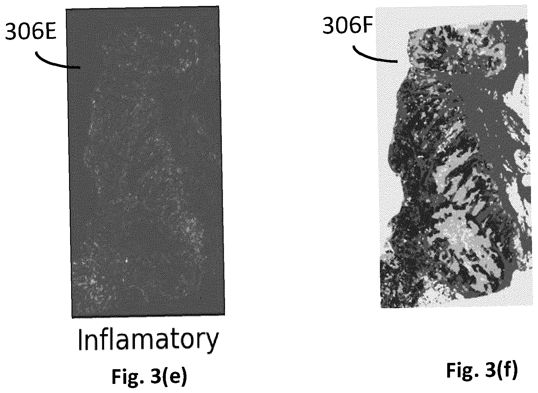

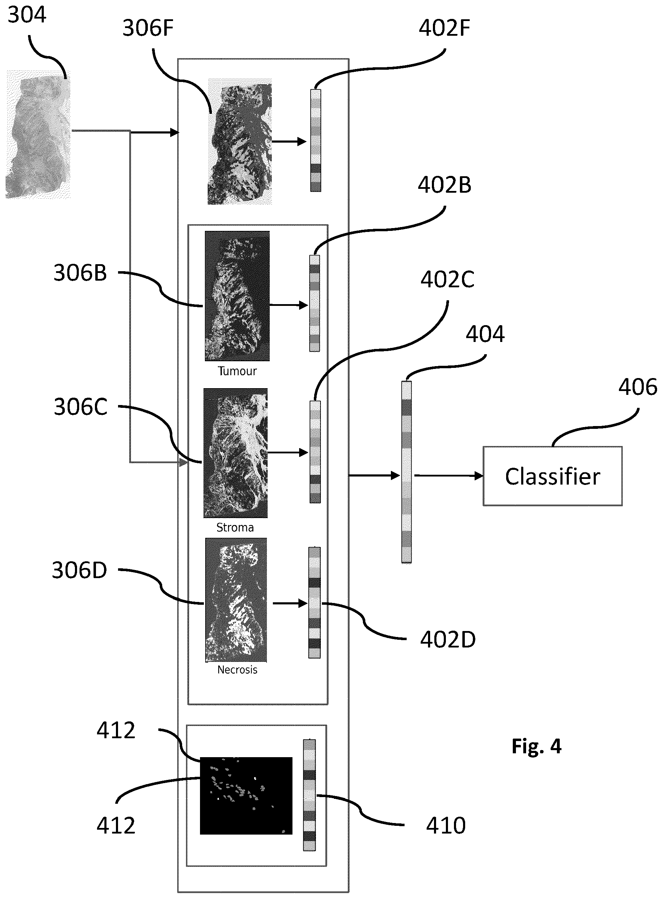

Figure 3(a) shows exemplary medical image data comprising an image 304 in the form of a WSI image. The images in Figures 3 and 4 have been converted to greyscale for the purposes of this document. However, it will be understood that the actual image data and colourmaps may comprise and be displayed in full colour.

The original image 304 has a high resolution, comprising billions of full-colour pixels and a storage size in the order of gigabytes. The image 304 includes many different cell types and tissue modalities.

A plurality of subsets of cells has been identified within the WSI image 304: Tumour regions; stroma regions; necrotic regions, and inflammatory regions. These subsets of cells are each identified by identifying one or more characteristics of the tissues in the image 304. For example, tumour regions may have a distinct morphology or colour compared to other regions in the image 304. A matrix is provided comprising a plurality of elements, each element corresponding to an area of the image 304. For each element in the matrix, an intensity value is assigned representing a feature of each of the identified subsets. In this example, each intensity value represents the spatial density of an identified cell type in the corresponding area of the image.

Additionally, a composite intensity value is generated based on the relationship between the identified subsets of cells. In this example, the composite intensity value indicates the dominant cell type for the corresponding area in the image. For example, if tumour cells cover the largest proportion of the corresponding area, then they are considered the dominant cell type and a first composite intensity value is assigned. The intensity values for each identified subset are visualised in Figures 3(b)-(e) as colourmaps 306B-306F. Colourmap 306B visualises the spatial density of tumour region across the image, Colourmap 306C visualises stroma region, Colourmap 306D visualises necrotic regions, Colourmap 306E visualises inflammatory regions. Colourmap 306F visualises the composite intensity value, such that the dominant cell type in each corresponding area is indicated by a distinct colour. The spatial distribution of the different tissue modalities can be recognised more easily from the colourmap representations 306B-306F in Figures 3(b)-(f), compared to the original image 304. This enables classifications to be made more easily and accurately. For example, a diagnostic classifier may be trained to locate a tumour 308 and identify its infiltration pattern 310 in the matrix visualised by the tumour cell colourmap 306B, in order to determine a classification.

The populated matrix containing the intensity values is processed to identify a diagnostic or prognostic classification with reference to one or more sets of intensity values. For example, in order to classify the risk level of tumours within the image 304, the intensity values representing the spatial density of tumour cells (as visualised by Figure 3(b) may be analysed.

The populated matrix may be used to determine regions of interest within the image. For example, once the locations of tumour regions are identified as shown in Figure 4(b), regions of interest may be selected covering the periphery of these locations.

The populated matrix may then be processed as illustrated by Figure 4. As previously described, the 304 is received and processed to populate the matrix. Embedding vectors 402 are then generated from the populated matrix. In this example, a plurality of embedding vectors 402 are generated. A composite embedding vector 402F is generated from the composite intensity values (as visualised in the composite colourmap 306F). Embedding vectors 402B-D are also generated from the intensity values representing the respective spatial density of tumour, stroma, and necrotic regions (as visualised by their respective colourmaps 306B-D).

In this example, an additional feature embedding vector 410 is generated representing additional characteristics of a subset of cells within a region of interest 412. In this case, the region of interest 412 is a tumour edge region and the additional feature embedding vector 410 represents the morphology of tumour cells 414 (highlighted in white) within the region of interest 412. The additional feature embedding vector 410 is processed along with the populated matrix by combining the additional feature embedding vector 410 with the other embedding vectors 402 and processing them in the classifier 406.

A collective embedding vector 404 is generated by selecting and/or combining one or more embedding vectors 402. The collective embedding vector is processed by a classification system 406 to obtain a diagnostic or prognostic classification.

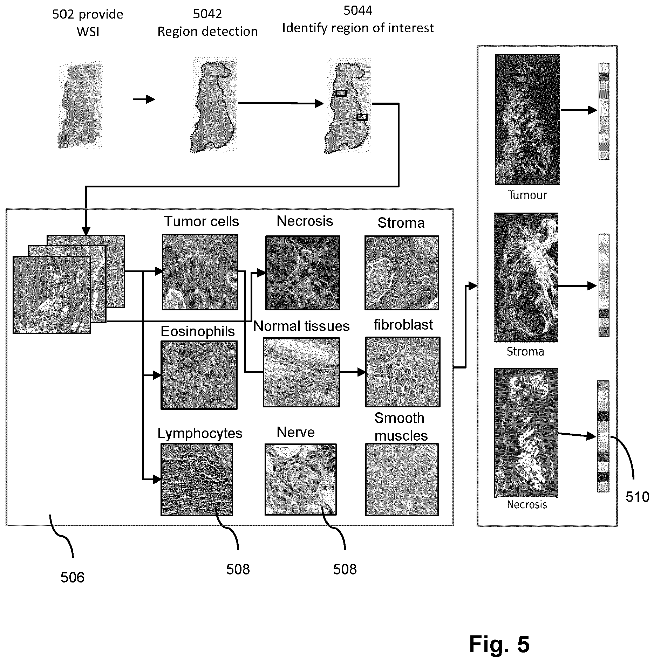

Figure 5 illustrates in more detail an example of how cells and tissues matching predetermined criteria within a region of interest can be identified within an image using a machine learning system.

In a first step, medical image data is provided 502. Regions (e.g. tumour edge regions) are segmented manually or by means of a region detection system 502. A plurality of regions of interest are identified 5044 manually or using a region identification system.

For each region of interest, a cell/tissue identification system 506 identifies and classifies cells/tissues based on their type 508 using a semantic similarity-based model and/or pretrained visual information identification system. In Figure 5, the possible types 508 of cell/tissue are: tumour, necrosis, stroma, eosinophil, normal tissue, fibroblast, lymphocyte, neuron, or smooth muscle. Each cell type/tissue type 508 has identifiable visual and spatial characteristics which distinguish it from other cells/tissues. Once the cell types have been classified, a matrix can be populated with intensity values. In this example, embedding vectors 510 are generated for one or more sets of intensity values in the matrix, with each embedding vector representing visual, locational, molecular or genomic features of a subset of cells.

Alternatively, the cell identification system 506 may be used to segment cells/tissue by type across the whole image. Following this, regions of interest are identified 5044 in the image.

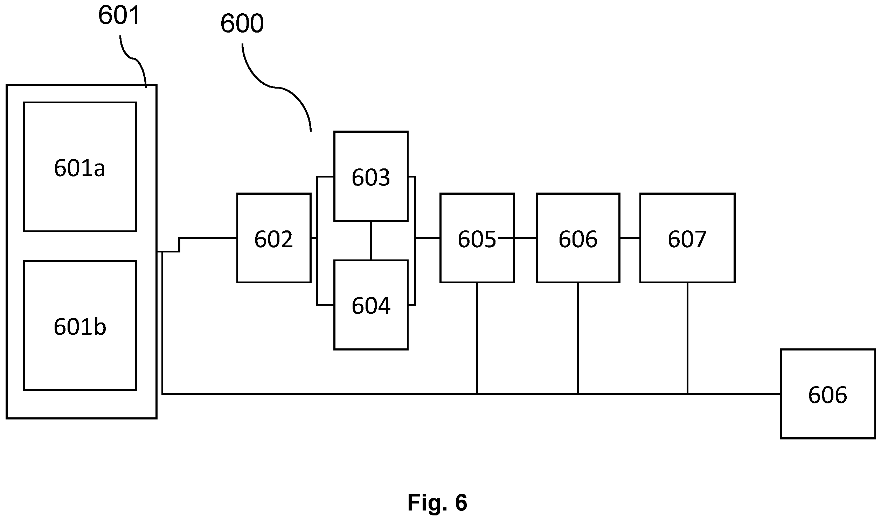

The architecture of an exemplary processing system 600 configured to carry out the method can be described in relation to Figure 6. The system 600 is configured to receive a dataset 601 comprising image data 601a and additional patient data 601b such as omics, medical history, as previously described. A pretrained region identification system 602 is configured to receive image data 601 from the dataset and identify regions of interest. Alternatively, regions of interest may be identified manually, for example by a human annotator. It then outputs information pertaining to the identified regions of interest (such as the boundaries of each region of interest in the image data) to a pretrained cell/tissue identification system 603 and a pretrained visual information identification system 604. Alternatively, cells and visual information may be identified manually. The cell/tissue identification system 603 is configured to identify relevant cells/tissues in the image data 601, i.e. cells in a region of interest which match predetermined criteria (e.g. being a lymphocyte). The cell identification 603 system may also records the location of each relevant cell in the image. The visual information identification system 604 is configured to identify visual features of cells in the region of interest, that encodes colour, morphology, and density. The cell identification system 603 and visual information identification system 604 also exchange information with each other. For example, the cell identification system 603 uses the morphology of each cell, as identified by the visual information identification system 604, as an input when determining the cell type. The visual information identification system 604 receives a list of the relevant cells from the cell identification system 603, and generates an embedding vector representing visual features of each relevant cell. In some examples, functions of the cell identification system 603 and visual information identification system 604 may be performed by a single identification system, which may be configured to use the visual information to identify the cell type.

A matrix populator 605 receives and combines the information from the cell identification system 603 and the visual information identification system 604, and populates a matrix. The matrix populator 605 may be part of the cell information identification system 603, such that the matrix is populated as the cells are identified and classified. This matrix may be sent to an output device 606 where it may be displayed or presented to a user for evaluation e.g. as a colourmap. Additionally, the populated matrix is passed to a classifier 606 which determines a classification by reference to the matrix. Alternatively, the populated matrix may be passed to a learning system that models the local and global information of the matrix. In some examples, the classifier 606 may also receive other local and global features from the image. A recommendation engine 607 receives the classification along with other patient data 601b, and generates a recommendation. The recommendation may include a diagnostic prediction, treatment regimen, or patient monitoring recommendation. The classification identified by the classifier 606 and the recommendation generated by the recommendation engine 607 are also passed to the output device for display to and evaluation by a user. In some examples, the classification is displayed alongside a representation of the populated matrix such as a colourmap.

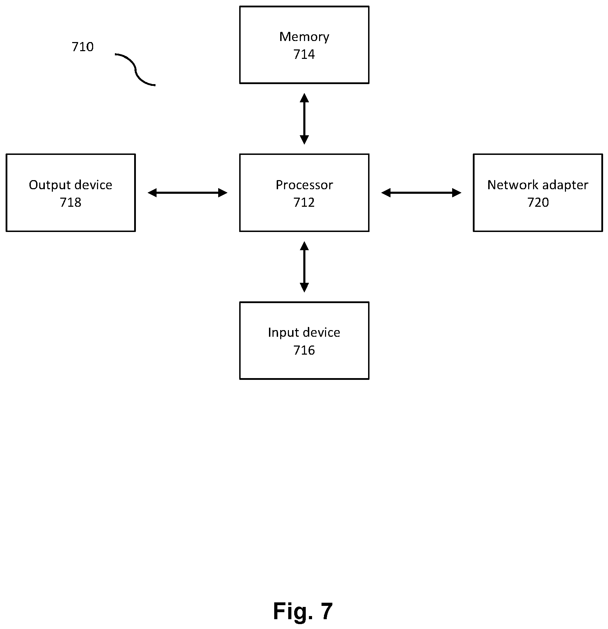

Figure 7 illustrates a schematic block diagram of a processing device for implementing the method. The processing device 710 comprises one or more processors 712 in communication with memory 714. The memory 714 is an example of a computer readable storage medium. The one or more processors 712 are also in communication with one or more input devices 716 and one or more output devices 718. The various components of the processing device 710 may be implemented using generic means for computing known in the art. For example, the input devices 716 may comprise a keyboard or mouse and the display devices 718 may comprise a monitor or display, or other output device such as a printer. The display devices 718 may be used to display one or more representations of populated matrices to a user as a colourmap. The classification result may also be displayed via the display device 718, enabling the user to compare the classification and colourmap and thereby ascertain whether the classification appears accurate. The user may be able to provide an input via the input devices 716 in order to view a particular set of data, or in order to provide information in response to the displayed colourmap or classification. For example, the user could use the input devices 716 to input a comment or a verification on the classification, or to add annotations to the colourmap.

In addition, the processing device 710 may comprise network access circuitry, such as a modem or network adaptor, to provide access to a network to obtain the image data and/or to transmit the determined classification. Alternatively, a different data entry and/or recording means, such as a portable disc drive or data interface may be provided in addition to, or instead of, the network adaptor 720 to provide the medical image data to the processing device 710 and/or record the classification.

It will be appreciated that, in some examples, the various hardware units may be integrated with one another. For example, where the processing device 710 is provided by a tablet computer or cellular telephone, a display of the device 710 may provide both the display of the output device 718 and a touch sensor providing the input device 716.

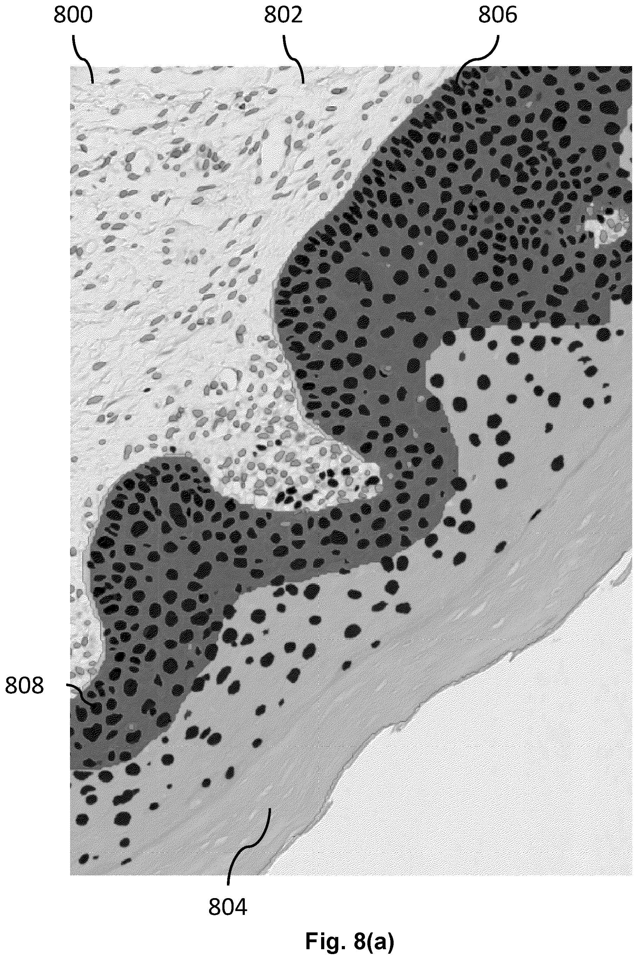

Figure 8(a) illustrates a medical image in the form of a whole-slide image 800. The image 800 comprises a tumour region 802, a tissue region 804, and a tumour edge region 806 interspersing them. In this example, the subset of cells identified in the image are tumour cells 808 in the tumour edge region 806 and surrounding stroma region 804. A matrix is provided at the same resolution as the original image 800 (i.e. each element of the matrix corresponds to an individual pixel in the original image 800). The intensity value assigned to each element of the matrix is a binary value representing the spatial density of the identified tumour cells 808. If the spatial density is above a threshold value, then the intensity value is set to 100%, otherwise the intensity value is set to 0%.

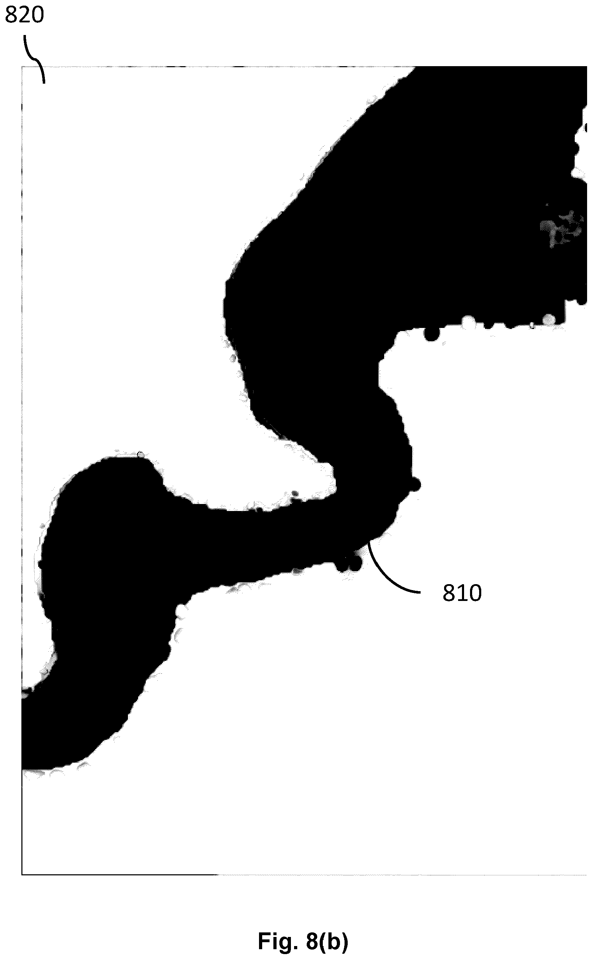

The populated matrix is represented by a colourmap 820 in Figure 8(b), highlighting the shape of the infiltration pattern 810 for analysis.

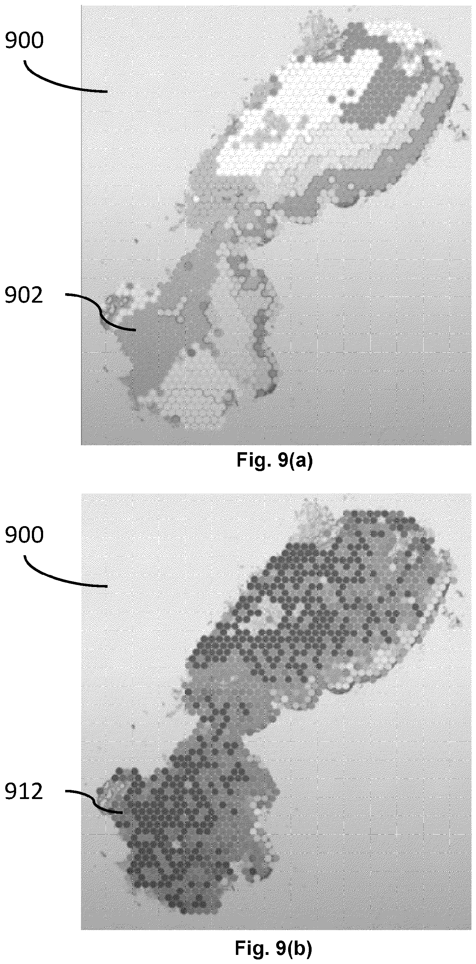

Figures 9(a) and 9(b) show further examples of colourmap representations 902 and 912, both overlaid over the original medical image 900. The matrix elements of each representation 902, 912 correspond to hexagonal areas of the original medical image 900. The first colourmap representation 902 is generated based on spatial RNA sequencing of cells in each corresponding area, with an intensity value selected based on the dominant RNA type. The resulting representation 902 shows how different cell types in the image 900 are distributed. The intensity values for the second representation 912 are generated based on the spatial density of cells in each corresponding area. The resulting representation 912 more clearly visualises how closely-packed cells are in different regions of the image 900.

Examples of the method are given in the following numbered clauses:
1. A method for analysing medical image data, the method comprising steps of:
   receiving medical image data comprising an image;
   using predetermined criteria to identify one or more subsets of cells in the image by identifying one or more characteristics of the cells;
   providing a matrix corresponding to the image comprising a plurality of elements, wherein each element corresponds to a spatial area in the image;
   populating the matrix by assigning an intensity value to each element in the matrix, the intensity value representing an intensity of a feature of the subset of identified cells in the corresponding area in the image, and
   processing the populated matrix to identify a classification for the medical image data.
2. The method of claim 1, further comprising the step of generating a representation from the matrix, and wherein the representation is processed to identify a classification, and optionally the representation is an image or graph.
3. The method of clause 1 or 2, wherein identifying the classification comprises providing the matrix or representation to a classification system.
4. The method of clause 3, wherein the classification system comprises a deep learning system, and optionally the classification system comprises one or more of a: convolutional neural network; decision tree; support vector machine; single or multi-layer perceptron; generative or adversarial network; autoencoder; inception system; monte carlo tree search model; residual neural network; self-organizing map; transformer-based model; graph convolutional neural network; graph model, or graph to graph autoencoder.
5. The method of any preceding clause, further comprising a step of generating a prediction based on the classification, and further optionally comprising a step of generating a treatment regimen based on the identified classification.
6. The method of any preceding clause, wherein the medical image data further comprises patient-related information, and the patient-related information and populated matrix are processed together to identify the classification.
7. The method of any preceding clause, wherein the feature comprises at least one of a: spatial; visual; morphological; genomic; or molecular feature of the subset of identified cells in the corresponding area of the image.
8. The method of any preceding clause, wherein the matrix has a differing resolution compared to a resolution of the image, and optionally the matrix has a differing dimensionality compared to a dimensionality of the image.
9. The method of any preceding clause, wherein processing the populated matrix to identify the classification for the medical image data comprises the step of generating an embedding vector from the populated matrix, and processing the embedding vector to identify the classification.
10. The method of any preceding clause, further comprising a step of identifying a region of interest within the medical image data or representation.
11. The method of clause 10, further comprising the step of generating an additional feature embedding vector representing one or more additional characteristics of a subset of cells within the region of interest; and wherein the populated matrix and additional feature embedding vector are processed to identify a classification for the medical image.
12. The method of any preceding clause, further comprising the steps of:
   providing a first and second matrix, the first matrix having a higher spatial resolution than the second matrix,
   populating the first and second matrices, and
   processing the first and second matrix to identify a classification for the medical image data.
13. The method of any preceding clause, wherein the step of using predetermined criteria to identify the one or more subsets of cells in the image by identifying one or more characteristics of the cells comprises classifying cells in the image by cell or tissue type.
14. The method of any preceding clause, wherein the step of using predetermined criteria to identify one or more subsets of cells in the image by identifying one or more characteristics of the cells comprises identifying features of cells in the image, and optionally identifying visual, morphological and spatial features of the cells comprises using a supervised or unsupervised model.
15. The method of clause 14, wherein identifying visual features of cells in the image data comprises using a pretrained visual information identification system.
16. The method of any preceding clause, further comprising the steps of:
   using predetermined criteria to identify a second subset of cells in the image by identifying one or more characteristics of the cells, and:
   assigning a second intensity value to each element in the matrix, the second value representing an intensity of a feature of the second subset of identified cells in the corresponding area in the image, and optionally
   the first identified set of cells comprises a first cell or tissue type, and the second identified subset of cells comprises a second cell or tissue type.
17. The method of any preceding clause, further comprising a step of displaying the matrix as a colourmap via a display device, wherein each element of the matrix is displayed with a colour intensity corresponding to its intensity value.
18. The method of any preceding clause, wherein identifying a classification comprises identifying, from the representation, a characteristic of a tumour within the representation, and optionally the characteristic comprises an infiltration pattern of the tumour.
19. The method of any preceding clause, wherein the image data comprises images of stained tissue or Whole Slide Image data.
20. The method of any preceding clause, further comprising the step of identifying, based on the classification, an importance level for one or more of the spatial or feature intensities charactersitcs, and further optionally, comprising the step of generating an explainability representation for the image data, the representation indicating the importance level for each of the one or more spatial areas or feature intensity characteristcs.
21. The method of any preceding clause, wherein the medical image data comprises a plurality of images, and the classification of the medical image data comprises a similarity score for each image in the medical image data.
21. A data processing device configured to carry out the method of any preceding clause.
22. A computer-readable storage medium comprising instructions which, when executed by a data processing device, cause the data processing device to carry out the method of any of clauses 1-20.
23. A computer program comprising instructions which, when executed by a data processing device, cause the data processing device to carry out the method of any of clauses 1 to 20.

## Claims

1. A method for analysing medical image data, the method comprising steps of:
receiving medical image data comprising an image;
using predetermined criteria to identify one or more subsets of cells in the image by identifying one or more characteristics of the cells;
providing a matrix corresponding to the image comprising a plurality of elements, wherein each element corresponds to a spatial area in the image;
populating the matrix by assigning an intensity value to each element in the matrix, the intensity value representing an intensity of a feature of the subset of identified cells in the corresponding area in the image, and
processing the populated matrix to identify a classification for the medical image data.

2. The method of claim 1, further comprising the step of generating a representation from the matrix, and wherein the representation is processed to identify a classification, and optionally the representation is an image or graph.

3. The method of claim 1 or 2, wherein identifying the classification comprises providing the matrix or representation to a classification system.

4. The method of claim 3, wherein the classification system comprises a deep learning system, and optionally the classification system comprises one or more of a: convolutional neural network; decision tree; support vector machine; single or multi-layer perceptron; generative or adversarial network; autoencoder; inception system; monte carlo tree search model; residual neural network; self-organizing map; transformer-based model; graph convolutional neural network; graph model, or graph to graph autoencoder.

5. The method of any preceding claim, wherein the medical image data further comprises patient-related information, and the patient-related information and populated matrix are processed together to identify the classification.

6. The method of any preceding claim, wherein the feature comprises at least one of a: spatial; visual; morphological; genomic; or molecular feature of the subset of identified cells in the corresponding area of the image.

7. The method of any preceding claim, wherein processing the populated matrix to identify the classification for the medical image data comprises the step of generating an embedding vector from the populated matrix, and processing the embedding vector to identify the classification.

8. The method of any preceding claim, further comprising a step of identifying a region of interest within the medical image data or representation, and optionally further comprising the step of generating an additional feature embedding vector representing one or more additional characteristics of a subset of cells within the region of interest; and wherein the populated matrix and additional feature embedding vector are processed to identify a classification for the medical image.

9. The method of any preceding claim, further comprising the steps of:
providing a first and second matrix, the first matrix having a higher spatial resolution than the second matrix,
populating the first and second matrices, and
processing the first and second matrix to identify a classification for the medical image data.

10. The method of any preceding claim, wherein the step of using predetermined criteria to identify one or more subsets of cells in the image by identifying one or more characteristics of the cells comprises identifying features of cells in the image, and optionally identifying visual, morphological and spatial features of the cells comprises using a supervised or unsupervised model, and further optionally identifying visual features of cells in the image data comprises using a pretrained visual information identification system.

11. The method of any preceding claim, further comprising the steps of:
using predetermined criteria to identify a second subset of cells in the image by identifying one or more characteristics of the cells, and:
assigning a second intensity value to each element in the matrix, the second value representing an intensity of a feature of the second subset of identified cells in the corresponding area in the image, and optionally
the first identified set of cells comprises a first cell or tissue type, and the second identified subset of cells comprises a second cell or tissue type.

12. The method of any preceding claim, further comprising a step of displaying the matrix as a colourmap via a display device, wherein each element of the matrix is displayed with a colour intensity corresponding to its intensity value.

13. A data processing device configured to carry out the method of any preceding claim.

14. A computer-readable storage medium comprising instructions which, when executed by a data processing device, cause the data processing device to carry out the method of any of claims 1-12.

15. A computer program comprising instructions which, when executed by a data processing device, cause the data processing device to carry out the method of any of claims 1 to 12.
